# FASCICULE DE BREVET EUROPEEN

(11) **EP 0 906 186 B1**
(45) Date de publication et mention de la délivrance du brevet: **06.03.2002**
(21) Numéro de dépôt: 97925995.9
(22) Date de dépôt: 11.06.1997
(51) Int. Cl.: B29D 30/36

(54) **TAMBOUR D'ASSEMBLAGE D'UN PNEUMATIQUE**
AUFBAUTROMMEL ZUR LUFTREIFENHERSTELLUNG
TYRE ASSEMBLY DRUM

(30) Priorité: 11.06.1996 FR 9607324
(43) Date de publication de la demande: 07.04.1999
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: BOSSEAUX, Bernard, F-63140 Châtel-Guyon (FR)
(74) Mandataire: Cohen, Sylvia
(86) Numéro de dépôt international: EP9703024
(87) Numéro de publication internationale: WO9747463

(56) Documents cités:
- EP-A- 0 468 580
- DE-A- 2 441 237
- US-A- 3 822 165
- PATENT ABSTRACTS OF JAPAN vol. 009, no. 172 (M-397), 17 Juillet 1985 & JP 60 044329 A (TOYO GOMU KOGYO KK), 9 Mars 1985,
- PATENT ABSTRACTS OF JAPAN vol. 6, no. 106 (M-213), 10 Mai 1983 & JP 58 028366 A (TOYO GOMU KOGYO KK), 19 Février 1983,
- PATENT ABSTRACTS OF JAPAN vol. 008, no. 090 (M-292), 25 Avril 1984 & JP 59 007034 A (MITSUBISHI JUKOGYO KK), 14 Janvier 1984,
- PATENT ABSTRACTS OF JAPAN vol. 007, no. 071 (M-202), 24 Mars 1983 & JP 57 212046 A (YOKOHAMA GOMU KK), 27 Décembre 1982,

## Description

La présente invention a pour objet un tambour utilisé pour l'assemblage de pneumatiques. Plus précisément, l'invention concerne un tambour utilisé pour la conformation pendant l'assemblage.

Une technique connue d'assemblage d'un pneumatique à carcasse radiale comprend schématiquement une étape dite de confection, puis une étape de conformation. Lors de la première étape généralement effectuée sur un premier tambour, on pose typiquement une première couche de gomme imperméable à l'air sur un tambour cylindrique d'assemblage à axe horizontal. Puis on pose la nappe de carcasse dont les fils de renfort sont sensiblement parallèles à l'axe du tambour. Ensuite, on confectionne les deux bourrelets circulaires, chacun étant habituellement composé d'une tringle et d'un bourrage. Enfin, on retourne les deux lisières de la nappe de carcasse autour des bourrelets et on pose les flancs.

Ayant ainsi obtenu une carcasse cylindrique, il faut passer à l'étape de conformation pour donner à la carcasse une forme grossièrement toroïdale, avant de poser la bande de roulement à sa périphérie. On transfère le plus souvent cette carcasse sur un autre tambour dit de deuxième temps ou de conformation, comportant deux systèmes de prise de bourrelet destinés à recevoir les bourrelets. Puis on rapproche axialement les deux systèmes de prise de bourrelet simultanément tout en conformant le pneumatique par gonflage.

Enfin, on pose sur la carcasse ainsi conformée, une couronne ou armature cylindrique, et la bande de roulement. Le pneumatique cru est alors prêt pour sa cuisson dans un moule où la vulcanisation lui donnera sa forme définitive.

Dans le brevet US 3,402,090 (voir notamment la figure 2 de celui-ci), on décrit un tambour de conformation sans membrane, constitué de deux systèmes de prise des bourrelets, radialement expansibles pour pouvoir s'appliquer de manière étanche à l'intérieur des bourrelets, avant d'être rapprochés pour conformer la carcasse par gonflage. Le brevet US 4,325,764 décrit un autre dispositif du même type, dans lequel les systèmes de prise de bourrelet des bourrelets comportent une butée circulaire axiale interne. Après avoir posé la carcasse sur les deux systèmes de prise de bourrelet, on commence par écarter les systèmes de prise de bourrelet l'un de l'autre pour amener la carcasse en butée ce qui a pour effet de bien la centrer. Puis on effectue l'expansion radiale des systèmes de prise de bourrelet et leur rapprochement, comme ci-dessus.
La conformation d'une carcasse de pneumatique est réalisée de la même façon avec le tambour décrit dans la demande de brevet JP 59 007034, dans lequel les deux systèmes de prise de bourrelets sont formés de segments expansibles radialement recouverts partiellement d'une membrane élastique.

Mais on a constaté depuis longtemps que l'opération de conformation reste une phase critique. En effet, pour certaines architectures de bourrelet, elle nécessite un mouvement de rotation des bourrelets sur eux-mêmes, accompagné d'un frottement sur lesdits systèmes de prise de bourrelet. Cela soumet les bourrelets à des contraintes très importantes. Comme à ce stade de la fabrication, les différents composants des bourrelets sont encore à l'état cru, ils subissent des déformations parfois préjudiciables à la qualité finale du pneumatique.

On a donc imaginé diverses solutions pour faciliter cette rotation des bourrelets. L'une d'elles consiste à équiper les systèmes de prise de bourrelet, qui comportent en général un support circulaire rigide, avec des membranes qui peuvent se déformer ou se déplacer au moment de la conformation de la carcasse, en accompagnant en quelque sorte la rotation des bourrelets. Le brevet US 5,246,515 concerne l'assemblage des pneumatiques pour avions, qui ont des bourrelets particulièrement volumineux. Le dispositif décrit comprend des systèmes de prise de bourrelet formés de segments radialement expansibles, cannelés, recouverts d'une membrane élastique qui entoure un bourrage circulaire de rappel. Au moment de la rotation des bourrelets, la membrane élastique, serrée entre ces derniers et les systèmes de prise de bourrelet associés, se tend en déformant le bourrage, et elle accompagne le bourrelet dans son mouvement. Mais ce système présente un inconvénient : le frottement de la membrane élastique sur la surface qui la supporte, pendant la rotation des bourrelets. D'ailleurs, le brevet prévoit une lubrification de cette zone pour y réduire les frottements.

La présente invention propose un tambour de conformation d'un pneumatique, comportant deux systèmes de prise de bourrelet montés en vis à vis sur un arbre central, chacun des systèmes de prise de bourrelet comportant :
- un support monté mobile axialement par rapport audit arbre,
- sur le support, un ensemble comportant une pluralité de segments rigides répartis circulairement autour dudit arbre, et une membrane élastique recouvrant au moins partiellement lesdits segments rigides, ceux-ci étant chacun montés sur ledit support, basculants autour d'une articulation dont l'axe est perpendiculaire à un plan radial, un siège étant conformé sur chaque ensemble, ledit siège étant formé sur ladite membrane axialement à l'intérieur par rapport auxdites articulations, lesdites articulations formant une couronne sur ledit support, ladite membrane élastique étant fixée sur le support axialement à l'intérieur de la couronne des articulations,
ledit tambour comportant des moyens d'étanchéité entre ledit arbre et chacun des supports, ainsi que des moyens pour acheminer un fluide de pressurisation dans l'espace autour de l'arbre central délimité par chacun des supports, et la membrane élastique comportant une fixation axiale extérieure située à une distance de l'extrémité axialement intérieure des segments qui est supérieure à trois fois la largeur du siège du bourrelet.

Lors du fonctionnement du tambour, lorsque les segments s'écartent radialement en basculant, le siège vient s'appliquer sous les bourrelets avec un léger déplacement axial tendant à écarter les bourrelets. Cela a pour effet de centrer la carcasse et de la positionner avec précision sur les systèmes de prise de bourrelet, avant de l'immobiliser et de la gonfler. D'autre part, la membrane élastique qui enveloppe les systèmes de prise de bourrelet a une longueur telle qu'elle peut s'étirer facilement et suivre le mouvement des bourrelets au cours de leur mise en place et de leur rotation. Par le choix des matériaux et éventuellement grâce à un traitement de surface judicieux des segments, les frottements sont extrêmement limités, ce qui améliore considérablement la qualité de la fabrication.

L'invention sera mieux comprise par la description qui va suivre, d'un exemple donné à titre non limitatif, en se référant au dessin annexé sur lequel :
les figures 1 à 4 sont des demi-coupes radiales schématiques des étapes successives de la mise en oeuvre du tambour objet de l'invention ;
la figure 5 est une vue en coupe plus détaillée du système de prise de bourrelet suivant l'invention.

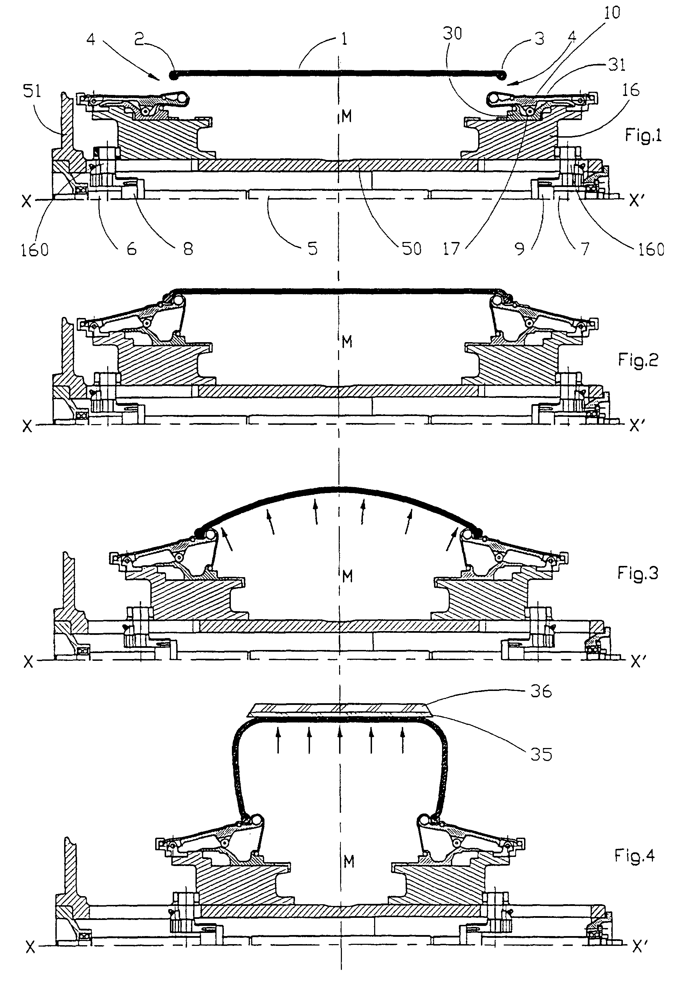

Les figures 1 à 4 sont la moitié supérieure d'une coupe schématique selon un plan radial. c'est-à-dire passant par l'axe horizontal X-X' du tambour, objet de l'invention. On y voit une carcasse cylindrique 1, avec ses deux bourrelets 2 et 3, en fin de transfert vers le tambour de conformation. Les deux bourrelets circulaires de cette carcasse sont disposés autour de deux systèmes de prise de bourrelet, circulaires et coaxiaux, désignés globalement par le repère 4. Lesdits systèmes de prise de bourrelet sont montés sur un fût 50 dont une extrémité comporte un flasque 51 permettant de monter le tambour sur une machine d'assemblage.

Le fût 50 contient un arbre 5 rotatif permettant de commander le mouvement axial relatif des systèmes 4 de prise de bourrelet. A cette fin, l'arbre 5 comporte des zones filetées à deux pas inversés 6 et 7 coopérant avec deux fourreaux filetés 8 et 9 actionnant les systèmes de prise de bourrelet 4 par l'intermédiaire de doigts 160 entraînant chacun un support 16.

Chacun de ces systèmes (voir en particulier la figure 5) de prise de bourrelet est constitué essentiellement d'un support 16, d'une pluralité de segments 10 rigides, et d'une membrane élastique 20 qui enveloppe les segments, de la façon qui va être explicitée dans la suite.

Chaque segment rigide 10 comporte un évidement 11 à son extrémité axialement intérieure 12. Un ressort circonférentiel 29 est disposé dans la gorge formée par ledit évidement 11 de tous les segments 10, de manière à provoquer le rappel en position rétreinte des segments 10. Ledit ressort 29 forme en outre une saillie sur chaque segment. Le ressort circonférentiel 29 est placé sous la membrane élastique 20, ce qui crée dans cette dernière une saillie annulaire S correspondante, dont le rôle sera expliqué plus loin.

Les segments 10 peuvent basculer radialement par leurs parties axialement exterieures 13, c'est à dire par leurs parties opposées au plan médian M, autour d'articulations 14. Ces articulations sont portées par des chapes 15 solidaires du support 16. Enfin, les segments 10 sont pourvus sur leur coté radialement interne d'au moins un galet 17 dont le rôle sera détaillé plus loin.

La membrane élastique 20 enveloppant les segments 10 est fixée au moyen de deux cerceaux situés, l'un 21 axialement à l'intérieur des articulations 14, et l'autre 22 axialement à l'extérieur des articulations 14. A cette fin, la membrane élastique 20, qui a une forme sensiblement cylindrique, comporte sur ses bords deux bourrelets circulaires 23 et 24 qui sont enserrés entre des rebords 26 et 27 aménagés sur les supports 16, d'une part, et d'autre lesdits cerceaux 21 et 22. Chaque rebord 27 est monté sur les chapes 15 de chaque support 16.

Bien entendu, on peut aussi envisager que le recouvrement des segments 10 par la membrane élastique 20 ne soit que partiel, en prévoyant néanmoins que la longueur de recouvrement soit suffisante pour permettre le suivi du mouvement des bourrelets et permettre la rotation.

Enfin, un coulisseau 30 est monté mobile axialement par rapport auxdits segments et audit support. Le coulisseau 30 comporte une face formant une came 31 inclinée par rapport à l'axe du tambour, définissant une surface conique de manière à constituer une rampe coopérant avec les galets 17. Le coulisseau 30 peut se déplacer sur le support 16 sous l'action d'un vérin à simple effet 33 dont on voit la canalisation pneumatique 330 de commande. Le rappel est assuré essentiellement par le ressort 29. Notons encore que, suivant une caractéristique avantageuse de l'invention, la fixation axialement intérieure de ladite membrane 20 est solidaire dudit coulisseau. Par ailleurs, de préférence, ladite fixation axialement intérieure est située radialement sous lesdits segments 10 lorsque ceux-ci sont en position rétreinte.

Notons encore que, afin de faciliter le mouvement de rotation du bourrelet pendant la conformation, il est préférable que la distance entre la fixation axialement extérieure de ladite membrane et l'extrémité axialement intérieure desdits segments soit assez grande, par exemple supérieure à trois fois la largeur du siège du bourrelet. Dans l'exemple décrit, un second ressort 28 contribue lui aussi à définir le siège. En tout état de cause, la largeur standard d'un bourrelet fabriqué sur un tambour donné ne varie pas dans de très grandes proportions, ce qui fait que l'on peut toujours évaluer la largeur axiale du siège du bourrelet.

On va maintenant décrire les étapes successives de la mise en oeuvre du tambour. En partant des positions représentées sur la figure 1, on commence par déplacer vers le plan médian M les deux coulisseaux 30, comportant les rampes 31. Cela a pour effet de soulever radialement les galets 17 et de faire basculer autour de leurs articulations 14 les segments 10, radialement vers l'extérieur, c'est à dire en s'écartant de l'axe X-X'.

La limite de ce basculement est atteinte lorsque le siège est en contact avec le bourrelet correspondant, pour pouvoir assurer l'étanchéité de la cavité interne limitée par la carcasse 1 et les systèmes de prise de bourrelet 4.

La présente invention présente un avantage important : un même dispositif que celui qui vient d'être décrit peut être utilisé pour plusieurs dimensions de pneumatiques ou, ce qui revient au même, pour plusieurs diamètres nominaux ; sur la Figure 5, on voit comment le même tambour permet de conformer des carcasses ayant, par exemple, des diamètres nominaux de 14 pouces ( A ) et de 15 pouces ( B ), suivant les normes en vigueur.

Pendant le basculement des segments 10, la membrane 20 qui les enveloppe s'étire sans difficulté compte tenu de sa grande longueur, jusqu'au moment où les bourrelets s'appuient radialement sur les sièges (figure 2) et viennent en butée axialement contre la saillie annulaire S due au ressort 29. On remarquera que le positionnement de la carcasse est extrêmement précis puisqu'il s'effectue d'une manière continue à la fois radialement et axialement, et cela en une seule opération.

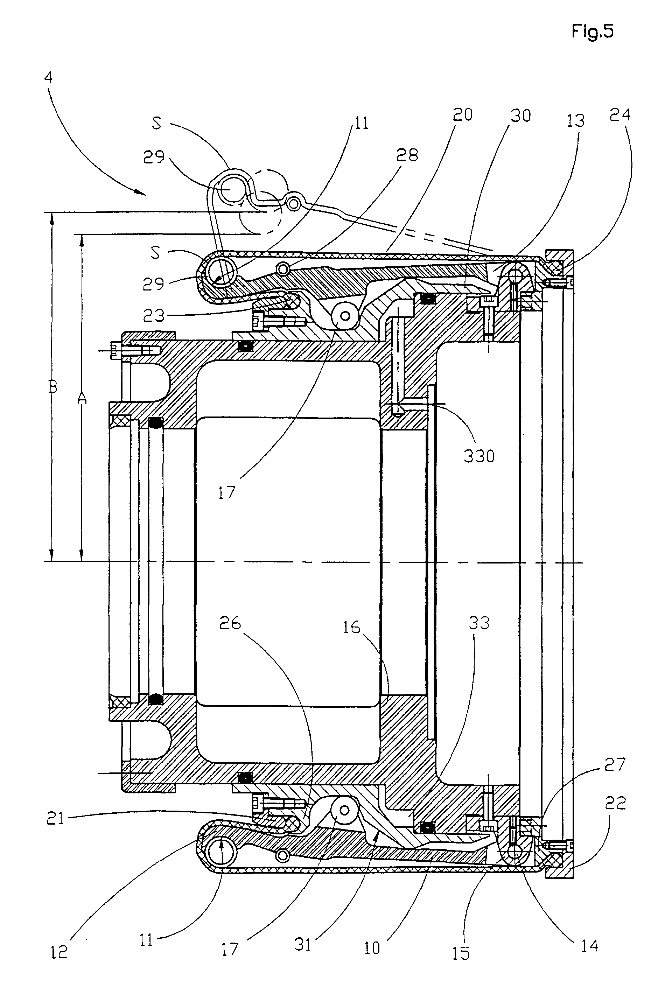

L'étanchéité de la carcasse 1 sur les systèmes de prise de bourrelet 4 étant ainsi obtenue, on conforme la carcasse comme on l'a expliqué plus haut. On rapproche les deux systèmes de prise de bourrelet par une rotation de l'arbre 5, qui entraîne les deux fourreaux 8 et 9 actionnant à leur tour axialement lesdits systèmes de prise de bourrelet, tout en injectant de l'air sous pression à l'intérieur de la carcasse 1 (figure 3). Pour simplifier le dessin, on n'a pas représenté le système de gonflage de la carcasse. Lorsque le diamètre extérieur de la carcasse atteint une valeur prédéterminée, on pose la couronne ou armature de sommet 35 et la bande de roulement 36 (figure 4). On peut alors continuer à rapprocher les deux systèmes de prise de bourrelet 4 pour finir de galber la carcasse.

Il est bien entendu que des modifications dans la forme ou des variantes dans le fonctionnement du dispositif qui vient d'être décrit peuvent être apportées par l'homme du métier sans sortir du cadre de l'invention.

## Revendications

1. Tambour de conformation d'un pneumatique, comportant deux systèmes (4) de prise de bourrelet montés en vis à vis sur un arbre (5) central, chacun des systèmes de prise de bourrelet comportant
- un support (16) monté mobile axialement par rapport audit arbre,
- sur le support, un ensemble comportant une pluralité de segments (10) rigides répartis circulairement autour dudit arbre, et une membrane élastique (20) recouvrant au moins partiellement lesdits segments rigides, ceux-ci étant chacun montés sur ledit support, basculants autour d'une articulation (14) dont l'axe est perpendiculaire à un plan radial, un siège étant conformé sur chaque ensemble, ledit siège étant formé sur ladite membrane axialement à l'intérieur par rapport auxdites articulations, lesdites articulations formant une couronne sur ledit support, ladite membrane élastique étant fixée sur le support axialement à l'intérieur de la couronne des articulations,
ledit tambour comportant des moyens pour acheminer un fluide de pressurisation dans l'espace autour de l'arbre central délimité par chacun des supports(16),
**caractérisé en ce que** la membrane élastique (20) comporte une fixation axiale extérieure située à une distance de l'extrémité axialement intérieure des segments (10) qui est supérieure à trois fois la largeur du siège du bourrelet, et que le tambour comporte des moyens d'étanchéité entre l'arbre (5) et chacun des supports (16).

2. Tambour selon la revendication 1, **caractérisé en ce que** la membrane élastique est fixée sur le support à l'intérieur et à l'extérieur de la couronne des articulations.

3. Tambour selon la revendication 1 ou 2, **caractérisé en ce que** le support comporte un coulisseau (30) formant une came (31) comportant au moins une rampe inclinée par rapport à l'axe du tambour, ledit coulisseau étant mobile axialement par rapport auxdits segments et audit support, ladite came coopérant avec des galets (17) solidaires desdits segments pour provoquer le basculement desdits segments rigides.

4. Tambour selon la revendication 1 à 3, **caractérisé en ce que** chaque segment rigide comporte à son extrémité axialement intérieure un évidement (11) et **en ce qu'**un ressort circonférentiel (29) est disposé sur ledit évidement de tous les segments, de manière à provoquer le rappel en position rétreinte des segments, ledit ressort formant ladite saillie sur chaque segment, ladite saille définissant ledit siège.

5. Tambour selon la revendication 3, dans lequel la fixation axialement intérieure de ladite membrane (20) est solidaire dudit coulisseau (30).

6. Tambour selon la revendication 5, dans lequel ladite fixation axialement intérieure est située radialement sous lesdits segments (10) lorsque ceux-ci sont en position rétreinte.

## Claims

1. A shaping drum for a tyre, comprising two bead holding systems (4) mounted opposite one another on a central shaft (5), each of the bead holding systems comprising:
- a support (16) mounted to be mobile axially relative to said shaft,
- on the support, an assembly comprising a plurality of rigid segments (10) distributed in a circle around said shaft, and an elastic membrane (20) at least partially covering said rigid segments, these each being mounted on said support, swinging about an articulation (14), the axis of which is perpendicular to a radial plane, a seat being formed on each assembly, said seat being formed on said membrane axially on the inside relative to said articulations, said articulations forming a crown on said support, said elastic membrane being fixed to the support axially on the inside of the crown of the articulations,
said drum comprising means for conveying a pressurisation fluid into the space around the central shaft defined by each of the supports (16),
**characterised in that** the elastic membrane (20) comprises an external axial fixing means located at a distance from the axially inner end of the segments (10) which is greater than three times the width of the seat of the bead, and that the drum comprises sealing means between the shaft (5) and each of the supports (16).

2. A drum according to Claim 1, **characterised in that** the elastic membrane is fixed to the support on the inside and on the outside of the crown of the articulations.

3. A drum according to Claim 1 or 2, **characterised in that** the support comprises a slide (30) forming a cam (31) comprising at least one ramp inclined relative to the axis of the drum, said slide being axially mobile relative to said segments and to said support, said cam cooperating with rollers (17) integral with said segments to cause the swinging of said rigid segments.

4. A drum according to Claims 1 to 3, **characterised in that** each rigid segment comprises a recess (11) on its axially inner end and **in that** a circumferential spring (29) is arranged on said recess of all the segments, so as to cause the return to the restrained position of the segments, said spring forming said projection on each segment, said projection defining said seat.

5. A drum according to Claim 3, in which the axially inner fixing means of said membrane (20) is integral with said slide (30).

6. A drum according to Claim 5, in which said axially inner fixing means is located radially beneath said segments (10) when they are in the restrained position.

## Patentansprüche

1. Verformungstrommel eines Reifens, die zwei Wulstaufnahmesysteme (4) aufweist, die einander gegenüberliegend auf einer mittigen Welle (5) angebracht sind, wobei jedes Wulstaufnahmesystem die folgenden Merkmale aufweist:
- ein Träger (16), der bezüglich der genannten Welle axialbeweglich angebracht ist, und
- eine Anordnung auf dem Träger, die eine Vielzahl von steifen, im Kreis rund um die genannte Welle verteilten Segmenten (10) und eine elastische Membran (20) aufweist, die die genannten, steifen Segmente mindestens teilweise überdeckt, die jeweils auf der genannten Unterlage um eine Anlenkung (14) herum schwenken, deren Achse senkrecht zu einer Radialebene verläuft, wobei ein Sitz auf jeder Anordnung ausgebildet ist, der genannte Sitz auf der genannten Membran axial auf der Innenseite ausgebildet ist, bezogen auf die genannten Anlenkungen, und die genante, elastische Membran auf der Unterlage axial auf der Innenseite des Kranzes aus den genannten Anlenkungen befestigt ist,
wobei die genannte Trommel Mittel aufweist, um ein Druckbeaufschlagungsströmungsmittel in den Raum rund um die mittige Welle zu leiten, der durch jeden der Träger (16) begrenzt ist,
**dadurch gekennzeichnet, daß** die elastische Membran (20) eine axiale, äußere Befestigung aufweist, die in einem Abstand vom axial inneren Ende der Segmente (10) gelegen ist, der größer ist als das dreifache der Breite des Sitzes des Wulstes, und daß die Trommel Abdichtungsmittel zwischen der Welle (5) und jedem der Träger (16) aufweist.

2. Trommel nach Anspruch 1, **dadurch gekennzeichnet, daß** die elastische Membran auf dem Träger auf der Innenseite und auf der Außenseite des Kranzes von Anlenkungen befestigt ist.

3. Trommel nach Anspruch 1 oder 2, **dadurch gekennzeichnet, daß** der Träger einen Schieber (30) aufweist, der eine Steuerfläche (31) bildet, die mindestens eine Rampe aufweist, die bezüglich der Achse der Trommel geneigt ist, wobei der genannte Schieber axial bezüglich der genannten Segmente und bezüglich des genannten Trägers beweglich ist und die genannte Steuerfläche mit Rollen (17) zusammenwirkt, die fest mit den genannten Segmenten verbunden sind, um die Schwenkbewegung der genannten, steifen Segmente hervorzurufen.

4. Trommel nach Anspruch 1 bis 3, **dadurch gekennzeichnet, daß** jedes steife Segment an seinem axial innerem Ende eine Ausnehmung (11) aufweist, und daß eine Umfangsfeder (29) in der genannten Ausnehmung aller Segmente angeordnet ist, um derart die Rückstellung in die eingezogene Lage der Segmente hervorzugrufen, wobei die genannte Feder den genannten Vorsprung auf jedem Element bildet und der genannte Vorsprung den genannten Sitz definiert.

5. Trommel nach Anspruch 3, worin die genante, axial innere Befestigung der genannten Membran (20) fest mit dem genannten Schieber (30) verbunden ist.

6. Trommel nach Anspruch 5, worin die genannte, axial innere Befestigung radial unter den genannten Segmenten (10) gelegen ist, wenn sich diese in der eingezogenen Lage befinden.
